# EUROPÄISCHE PATENTSCHRIFT

(11) **EP 1 680 276 B1**
(45) Veröffentlichungstag und Bekanntmachung des Hinweises auf die Patenterteilung: **18.11.2009**
(21) Anmeldenummer: 04765212.8
(22) Anmeldetag: 15.09.2004
(51) Int. Cl.: B32B 27/08, B32B 27/36, C08L 69/00, C08L 33/12

(54) **MEHRSCHICHTFOLIE AUS (METH)ACRYLATCOPOLYMER UND POLYCARBONAT**
MULTILAYERED FILM MADE OF (METH)ACRYLATE COPOLYMER AND POLYCARBONATE
FILM MULTICOUCHE CONSTITUE DE COPOLYMERE (METH)ACRYLIQUE ET DE POLYCARBONATE

(30) Priorität: 03.11.2003 DE 10351535
(43) Veröffentlichungstag der Anmeldung: 19.07.2006
(73) Patentinhaber: Evonik Röhm GmbH, 64293 Darmstadt (DE); Senoplast Klepsch & Co. GmbH, 5721 Piesendorf (AT)
(72) Erfinder: SCHULTES, Klaus, 65197 Wiesbaden (DE); WICKER, Michael, 64342 Seeheim-Jugenheim (DE); ALBRECHT, Klaus, 55129 Mainz (DE); RÜPPEL, Mona, 64739 Hoechst (DE); DASSINGER, Gabriele, 63811 Stockstadt (DE); REINHEIMER, Eric, 64846 Gross-Zimmern (DE)
(86) Internationale Anmeldenummer: PCT/EP2004/010298
(87) Internationale Veröffentlichungsnummer: WO 2005/051657

(56) Entgegenhaltungen:
- WO-A-02/14427
- DE-A- 3 837 589
- MARIN N ET AL: "Co-continuous morphology development in partially miscible PMMA/PC blends" POLYMER, ELSEVIER SCIENCE PUBLISHERS B.V, GB, Bd. 43, Nr. 17, August 2002 (2002-08), Seiten 4723-4731, XP004374529 ISSN: 0032-3861

## Beschreibung

Die Erfindung betrifft eine Mehrschichtfolie aus (Meth)acrylatcopolymer und Polycarbonat, Verfahren zu ihrer Herstellung, sowie Verwendung und teilverträgliche Polymermischungen aus (Meth)acrylatcopolymeren und Polycarbonat.

### Stand der Technik

Grefenstein, A. und Kaymak, K. beschreiben in Kunststoffe 8/2003, S. 84 - 87 (© Carl Hanser Verlag, München (www.kunststoffe.de) 93. Jahrgang) im Artikel "Folie statt Lackierung" Werkstofftechnologien für Karosserieaußenteile von Kraftfahrzeugen auf Basis von Trägerschichten aus ASA-(Acrylsäureester/Styrol/Acrylnitril-Pfropfcopolymer), ASA-PC (Acrylsäureester/Styrol/Acrylnitril-Pfropfcopolymer/Polycarbonat), ABS-(Acrylnitril-Butadien-Stryrol) und SAN- (Folien mit Mehrschichtaufbau, die mit UV-haltiger Deckschicht und darunter liegenden Farbschichten versehen sind. Die Deckschichten können aus PMMA oder SAN (Styrol/Acrylnitril-Copolymer) coextrudiert werden. Die Folien können mit verschiedenen Kunststoffen wie z. B. Polybutylenterephthalaten oder Polyurethanen hinterspritzt bzw. hinterschäumt werden, wobei z. B. mit Glasfasern verstärkte Systeme in Betracht kommen.

DE 37 19 239 A1 beschreibt transparente, thermoplastisch verarbeitbare Polymermischungen aus (Meth)acrylatcopolymeren und Polycarbonaten. Es handelt sich dabei um verträgliche Polymermischungen. Es wird erwähnt, daß beispielsweise Methylmethacrylat-Copolymerisate mit 5 bis 50 Gew.-% Cyclohexylmethacrylat und einem η_{spec}/c von 40 bis 45 ml/g über den gesamten Legierungsbereich mit Bisphenol-A-Polycarbonat, z.B. Makrolon® 1189, das ein η_{spec}/c von 43 ml/g (gemessen in Chloroform) hat, verträglich sind. Es resultieren glasklare Polymere.

DE 38 37 589 A1 beschreibt eine UV-Absorber-haltige Methacrylatschutzschicht für Polycarbonat. Beansprucht werden mehrschichtige Kunststoffkörper mit einer Kernschicht aus mehr als 50 Gew.-% aromatischem Polycarbonat und einer darauf aufgebrachten, UV-Absorber enthaltenden Schicht aus (Meth)acrylatcopolymeren, die noch mit weiteren Schichten belegt sein kann. Als geeignete (Meth)acrylatcopolymere werden solche empfohlen, die verträgliche Mischungen mit Polycarbonat ausbilden können. Dadurch wird z. B. eine gute Haftung der (Meth)acrylatcopolymer Schichten auf dem Polycarbonat-Träger erreicht. Es kann sich bei den mit Polycarbonat verträglichen (Meth)acrylatcopolymeren z. B. um Copolymerisate aus 80 Gew.-% Methylmethacrylat und 20 Gew.-% Cyclohexylmethacrylat handeln. Sowohl Polycarbonate als auch (Meth)acrylatcopolymere werden in allgemeiner Form sehr weit gefasst, wobei davon vereinfacht ausgegangen wird, daß Mischungen der Komponenten in jedem Verhältnis miteinander verträglich sind.

Die als Schutzschichten für Polycarbonatkunststoffe wegen ihrer guten Haftung ausgewählten Methacrylat-Copolymeren bilden entsprechend der Kriterien nach der "Transition Temperature Method" und nach der "Optical Methode", wie sie für verträgliche Polymermischungen gefordert und im Kapitel "Compatible Polymers" in Polymer Handbook, Second Edition, Copyright C 1975, by John Wiley & Sons; III, 211, beschrieben sind, mit dem Polycarbonat des Bisphenol A verträgliche Mischungen. Diese verträglichen Mischungen lassen sich weiter durch ihr LCST-Verhalten (D.R. Paul, Polymer Blends ans Mixtures, 1985, S. 1 bis 3; Martinus Nijhoff Publishers, Dordrecht, Boston Lancaster; Kirk-Othmer, 3rd, Ed. Vol. 18, pg. 443 - 478, J. Wiley 1982) so charakterisieren, daß sie eine untere Entmischungstemperatur von ≥ 120 °C, besonders ≥ 150 °C besitzen. Experimentell wird dazu der Trübungspunkt T_{Tr} (Trübungstemperatur) bestimmt, z.B. auf der Kofler-Heizbank (Chem. Ing.-Technik 1950, S. 289), der den von der qualitativen und quantitativen Mischungszusammensetzung abhängigen Phasenübergang, homogen nach heterogen, des Gemisches charakterisiert.

### Aufgabe und Lösung

Es wurde als Aufgabe gesehen eine Mehrschichtfolie bereitzustellen, die hohen Anforderungen, wie sie insbesondere bei der Verwendung für Karosserieaußenteile von Kraftfahrzeugen bestehen, genügen soll. Insbesondere sollen gute mechanische Materialeigenschaften mit hohen Werten für den E-Modul (ISO 527-2) bei 23 und 100 °C und die Bruchdehnung (ISO 527-2) bei 23 °C und 100 °C, realisiert werden. Hohe Witterungs- und Chemikalienbeständigkeit, sowie eine hohe Temperaturbeständigkeit sind weitere Anforderungen. Darüberhinaus sollen aber auch Abfälle des Folienmaterials wieder verwertbar sein. Dies ist nicht nur aus Umweltschutzgründen wünschenswert, sondern soll auch eine effiziente Nutzung des bei der Verarbeitung als Verschnitt anfallenden Folienabfallmaterials ermöglichen.

Die Aufgabe wird gelöst durch eine
Mehrschichtfolie, umfassend zumindest eine obere Schicht a) und eine mittlere Schicht b) aus (Meth)acrylatcopolymeren sowie eine Trägerschicht c) aus Polycarbonat, **dadurch gekennzeichnet, daß**
a) die obere Schicht ein Lichtschutzmittel enthält und aus einem (Meth)acrylatcopolymeren besteht, welches mit dem Polycarbonat der Trägerschicht c) teilverträgliche Mischungen ausbilden kann, wobei ein aus einer Mischung aus 20 Gew.-% (Meth)acrylatcopolymer und 80 Gew.-% Polycarbonat hergestellter Probekörper eine Bruchdehnung (ISO 527-2) bei 23 °C von mindestens 75 % aufweist,
b) die mittlere Schicht einen Farbstoff und gegebenenfalls ein Lichtschutzmittel enthält und aus einem identischen oder verschiedenen (Meth)acrylatcopolymeren besteht, welches mit dem Polycarbonat der Trägerschicht c) teilverträgliche Mischungen ausbilden kann, wobei ein aus einer Mischung aus 20 Gew.-% (Meth)acrylatcopolymer und 80 Gew.-% Polycarbonat hergestellter Probekörper eine Bruchdehnung (ISO 527-2) bei 23 °C von mindestens 75 % aufweist,
c) die Trägerschicht aus Polycarbonat besteht, welches gegebenenfalls bis zu 30 Gew.-% des Materials der Schichten a) und b) enthalten kann.

Die Erfindung geht aus von verträglichen Polymermischungen aus (Meth)acrylatcopolymeren und Polycarbonat wie sie in DE 38 37 589 A1und DE 37 19 239 A1 beschrieben werden. Es hat sich jedoch gezeigt, daß die dort näher beschriebenen verträglichen Polymermischungen nicht geeignet sind, um Mehrschichtfolien mit den angestrebten hohen Materialanforderungen, insbesondere den mechanischen Eigenschaften E-Modul und Bruchdehnung, bereitzustellen. Es wurde nun gefunden, daß man die gestellten Ziele dann erreichen kann, wenn man anspruchsgemäß die Polymerkomponenten so einstellt, daß die (Meth)acrylatcopolymeren mit dem Polycarbonat der Trägerschicht c) teilverträgliche Mischungen ausbilden können. Die Teilverträglichkeit der Polymere reicht dabei aus, um noch eine ausreichend gute Haftung der (Meth)acrylatcopolymeren auf der Polycarbonat-Trägerschicht zu gewährleisten. Der mit der Teilverträglichkeit einhergehende Verlust der Transparenz kann in Kauf genommen werden, da ohnehin für den angestrebten Anwendungsbereich nur eingefärbte Mehrschichtfolien in Frage kommen. Die Erfindung betrifft weiterhin ein Verfahren zur Herstellung der Mehrschichtfolien, ihre Verwendungen.

(Meth)acrylatcopolymer und Polycarbonat sind dabei so aufeinander abgestimmt, daß ein aus einer Mischung aus 20 Gew.-% (Meth)acrylatcopolymer und 80 Gew.-% Polycarbonat hergestellter Probekörper eine Bruchdehnung (ISO 527-2) bei 23 °C von mindestens 75 % aufweist.

Die so definierte Bruchdehnung (ISO 527-2) bei 23 °C von mindestens 75 % stellt eine vergleichsweise hohe Basisanforderung für die mechanische Belastbarkeit der Mehrschichtfolie dar.

Die Trägerschicht c) kann gegebenenfalls bis zu 30 Gew.-% des Materials der Schichten a) und b) enthalten. Die Teilverträglichkeit der Mischungen ist dabei die entscheidende Voraussetzung, die ein Recycling von Folienabfällen ohne eine gleichzeitige zu starke Verschlechterung bzw. Veränderung physikalischchemischer oder mechanischer Eigenschaften ermöglicht.

Die Erfindung betrifft ebenfalls teilverträgliche Polymermischungen aus (Meth)acrylatcopolymeren und Polycarbonat, die ja einen wichtigen Beitrag zur Lösung der eingangs diskutierten Aufgaben beitragen.

### Ausführung der Erfindung

Die Erfindung betrifft eine Mehrschichtfolie, umfassend zumindest eine obere Schicht a) und eine mittlere Schicht b) aus (Meth)acrylatcopolymeren sowie eine Trägerschicht c) aus Polycarbonat. Die Schichten a), b) und c) können übliche Zusatz- und Hilfsstoffe enthalten.

### Obere Schicht a)

Die obere Schicht a) enthält mindestens ein Lichtschutzmittel und besteht aus einem (Meth)acrylatcopolymeren, welches mit dem Polycarbonat der Trägerschicht c) teilverträgliche Mischungen ausbilden kann, wobei ein aus einer Mischung aus 20 Gew.-% (Meth)acrylatcopolymer und 80 Gew.-% Polycarbonat hergestellter Probekörper eine Bruchdehnung (ISO 527-2) bei 23 °C von mindestens 75 % aufweist.

### Teilverträgliche Mischungen

Teilverträgliche Polymermischung aus einem (Meth)acrylatcopolymer und einem Polycarbonat, **dadurch gekennzeichnet, daß** ein aus der Polymermischung hergestellter Probekörper in Folge der Teilverträglichkeit der Polymere in der Durchsicht nicht transparent sondern transluzent , also getrübt durchsichtig, erscheint und ein aus einer Mischung aus 20 Gew.-% (Meth)acrylatcopolymer und 80 Gew.-% Polycarbonat hergestellter Probekörper eine Bruchdehnung (ISO 527-2) bei 100 °C mit einem Relativwert von mindestens 90 % des Wertes des enthaltenen Polycarbonats aufweist.

Die Transluzenz äußert sich z. B. in einer gegenüber klaren Formkörpern deutlich reduzierten Transmission.

Der Lichttransmissionsgrad für Tageslicht (Normlichtart D65, 10°) τ_{D65} s. z. B. DIN 5033/5036, eines Probekörpers aus Mischung gleicher Anteile von teilverträglichen (Meth)acrylatcopolymeren und Polycarbonat kann z. B. im Bereich von 25 bis 65 % liegen.

Die teilverträgliche Mischung unterscheidet sich wiederum optisch von einer unverträglichen Mischung aus Polymethylmethacrylat und Polycarbonat, dadurch daß letztere undurchsichtig opak mit perlartigem Glanz versehen sind (Lichttransmissionsgrad < 25 %).

### (Meth)acrylatcopolymere

(Meth)acrylatcopolymere, die mit dem Polycarbonat der Trägerschicht c) teilverträgliche Mischungen ausbilden können, können aus folgenden Einheiten bestehen:
a) 95 bis 5, bevorzugt 93 bis 50, insbesondere 90 bis 70 Gew.-% Methylmethacrylat-Einheiten und gegebenenfalls 0 bis 40, bevorzugt 0 bis 10 Gew.-%, besonders bevorzugt jedoch keinen weiteren vinylischen Monomer-Einheiten und
b) 5 bis 95, bevorzugt 7 bis 50, insbesondere 10 bis 30 Gew.-% Estern der (Meth)acrylsäure, die folgende Reste in der Estergruppe aufweisen können:

Cycloalkyl- oder ein mehrfachalkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäure-Carboxylrest gebunden sein können.

### Geeignete Monomere b) sind z. B.

Cyclopentylmethacrylat,
Cyclohexylacrylat, Cyclohexylmethacrylat,
3,3,5-Trimethylcyclohexylmethacrylat,
4-t-Butylcyclohexylacrylat, 4-t-Butylcyclohexylmethacrylat,
3-Cyclohexylpropylmethacrylat,

Bevorzugt sind (Meth)acrylatcopolymere, aus 60 bis 95, besonders bevorzugt 70 bis 90 Gew.-% Methylmethacrylat und 40 bis 5, besonders bevorzugt 30 bis 10 Gew.-% Cyclohexylmethacrylat bestehen.

Bevorzugt sind (Meth)acrylatcopolymere, die eine Lösungsviskosität in Chloroform bei 25 °C (ISO 1628 - Teil 6) im Bereich von 50 bis 80, besonders bevorzugt von 55 bis 70 ml/g aufweisen.

Bevorzugt weisen die (Meth)acrylatcopolymere eine Vicaterweichungstemperatur VET (ISO 306-B50) von mindestens 105 °C, besonders bevorzugt mindestens 106 °C, insbesondere mindestens 107 °C auf. Bevorzugt ist der MVR-Wert der (Meth)acrylatcopolymer gleich und besonders bevorzugt höher als der der Schmelze der Schicht c) insbesondere kann der der MVR-Wert der (Meth)acrylatcopolymere im Bereich von 0,8 bis 2,0, bevorzugt von 1,0 bis 1,8 liegen.

### Lichtschutzmittel

Unter Lichtschutzmitteln sollen UV-Absorber, UV-Stabilisatoren und Radikalfänger verstanden werden.

Optional enthaltene UV-Schutzmittel sind z. B. Derivate des Benzophenons, dessen Substituenten wie Hydroxyl- und/oder Alkoxygruppen sich meist in 2-und/oder 4-Stellung befinden. Hierzu zählen 2-Hydroxy-4-n-octoxybenzophenon, 2,4-Dihydroxybenzophenon, 2,2'-Dihydroxy-4-methoxybenzophenon, 2,2',4,4'-Tetrahydroxybenzophenon, 2,2'-Dihydroxy-4,4'-dimethoxybenzophenon, 2-Hydroxy-4-methoxybenzophenon. Desweiteren sind substituierte Benztriazole als UV-Schutz-Zusatz sehr geeignet, wozu vor allem 2-(2-Hydroxy-5-methylphenyl)-benztriazol, 2-[2-Hydroxy-3,5-di-(alpha,alpha-dimethyl-benzyl)-phenyl]-benztriazol, 2-(2-Hydroxy-3,5-di-t-butylphenyl)-benztriazol, 2-(2-Hydroxy-3-5-butyl-5-methylphenyl)-5-chlorbenztriazol, 2-(2-Hydroxy-3,5-di-t-butylphenyl)-5-chlorbenztriazol, 2-(2-Hydroxy-3,5-di-t-amylphenyl)-benztriazol, 2-(2-Hydroxy-5-t-butylphenyl)-benztriazol, 2-(2-Hydroxy-3-sek-butyl-5-t-butylphenyl)-benztriazol und 2-(2-Hydroxy-5-t-octylphenyl)-benztriazol, Phenol, 2,2'-methylenbis[6-(2H-benztriazol-2-yl)-4-(1,1,3,3,-tetramethylbutyl)] zählen.

Neben den Benztriazolen kann auch ein UV-Absorber der Klasse der 2-(2'-Hydroxyphenyl)-1,3,5-Triazine, wie beispielweise Phenol, 2-(4,6-diphenyl-1,2,5-triazin-2-xy)-5-(hexyloxy), eingesetzt werden.

Weiterhin einsetzbare UV-Schutzmittel sind 2-Cyano-3,3-diphenylacrylsäureethylester, 2-Ethoxy-2'-ethyl-oxalsäurebisanilid, 2-Ethoxy-5-t-butyl-2'-ethyl-oxalsäurebisanilid und substituierte Benzoesäurephenylester.

Die Lichtschutzmittel bzw. UV-Schutzmittel können als niedermolekulare Verbindungen, wie sie vorstehend angegeben sind, in den zu stabilisierenden Polymethacrylatmassen enthalten sein. Es können aber auch UVabsorbierende Gruppen in den Matrixpolymermolekülen kovalent nach Copolymerisation mit polymerisierbaren UV-Absorptionsverbindungen, wie z. B. Acryl-, Methacryl oder Allylderivaten von Benzophenon- oder Benztriazolderivaten, gebunden sein.
Der Anteil von UV-Schutzmitteln, wobei dies auch Gemische chemisch verschiedener UV-Schutzmittel sein können, beträgt in der Regel 0,01 bis 10 Gew.-%, vor allem 0,01 bis 5 Gew.-%, insbesondere 0,02 bis 2 Gew.-% bezogen auf das (Meth)acrylatcopolymer der Schicht a).

Als Beispiel für Radikalfänger/UV-Stabilisatoren seien hier sterisch gehinderte Amine, die unter dem Namen HALS (Hindered Amine Light Stabilizer) bekannt sind genannt. Sie können für die Inhibierung von Alterungsvorgängen in Lacken und Kunststoffen, vor allem in Polyolefinkunststoffen, eingesetzt werden (Kunststoffe, 74 (1984) 10, S. 620 bis 623; Farbe + Lack, 96 Jahrgang, 9/1990, S. 689 bis 693). Für die Stabilisierungswirkung der HALS-Verbindungen ist die darin enthaltene Tetramethylpiperidingruppe verantwortlich. Diese Verbindungsklasse kann am Piperidinstickstoff sowohl unsubstituiert als auch mit Alkyl- oder Acylgruppen substituiert sein. Die sterisch gehinderten Amine absorbieren im UV-Bereich nicht. Sie fangen gebildete Radikale ab, was die UV-Absorber wiederum nicht können.
Beispiele für stabilisierend wirkende HALS-Verbindungen, die auch als Gemische eingesetzt werden können sind:
Bis-(2,2,6,6-tetramethyl-4-piperidyl)sebacat, 8-Acetyl-3-dodecyl-7,7,9,9-tetramethyl-1,3-8-triazaspiro(4,5)-decan-2,5-dion, Bis-(2,2,6,6-tetramethyl-4-piperidyl)-succinat, Poly-(N-β-hydroxyethyl-2,2,6,6-tetramethyl-4-hydroxypiperidin-bernsteinsäureester) oder Bis-(N-methyl-2,2,6,6-tetramethyl-4-piperidyl)-sebacat.

Angewendet werden die Radikalfänger/UV-Stabilisatoren in den erfindungsgemäßen Polymermischungen in Mengen von 0,01 bis 15 Gew.-%, vor allem in Mengen von 0,02 bis 10 Gew.-%, insbesondere in Mengen von 0,02 bis 5 Gew.-% bezogen auf das (Meth)acrylatcopolymer der Schicht a).

### Mittlere Schicht b)

Die mittlere Schicht enthält einen Farbstoff und optional Lichtschutzmittel und besteht aus einem mit dem der Schicht a) identischen oder verschiedenen (Meth)acrylatcopolymeren, welches mit dem Polycarbonat der Trägerschicht c) teilverträgliche Mischungen ausbilden kann, wobei ein aus einer Mischung aus 20 Gew.-% (Meth)acrylatcopolymer und 80 Gew.-% Polycarbonat hergestellter Probekörper eine Bruchdehnung (ISO 527-2) bei 23 °C von mindestens 75 % aufweist.

Bevorzugt ist die die mittlere Schicht deckend eingefärbt, z. B. schwarz oder grau. Geeignete Farbstoffe oder Pigmente sind dem Fachmann bekannt.

(Meth)acrylatcopolymere die für die Schicht a) geeignet sind, sind somit auch für die Schicht b) geeignet.

### Trägerschicht c)

Die Trägerschicht c) besteht aus Polycarbonat. Bevorzugt weist das Polycarbonat der Trägerschicht c) einen um nicht mehr als 30 % höheren oder einen niedrigeren MVR-Wert (ISO 1133, 230 °C / 3,8 kg) als die Schmelzen der Schichten a) oder b) auf, die im wesentlichen aus den (Meth)acrylatcopolymeren bestehen, jedoch gegebenenfalls auch den MVR-Wert beeinflussende Zusatz- oder Hilfsstoffe enthalten können. Gemäß dieser Anforderung sind nur vergleichsweise hochmolekulare oder aber zumindest höher verzweigte Polycarbonate für die Zwecke der Erfindung geeignet, die in der Regel höheren mechanischen Anforderungen genügen als niedermolekulare Polycarbonate, die aus vielen Standard-Anwendungen bekannt sind.

Das bevorzugte Verhältnis der MVR-Werte der (Meth)acrylatcopolymer und des Polycarbonats begünstigt weiterhin die Herstellung im Coextrusionsverfahren, da die Unterschiede zu den Schmelzen a) und b) im MVR-Wert dadurch begrenzt werden, indem in der Schmelze zu leicht fließende Polycarbonate ausgeschlossen werden.

Die Trägerschicht c) kann gegebenenfalls bis zu 30 Gew.-% des Materials der Schichten a) und b) enthalten.

Bevorzugt ist der MVR-Wert des Polycarbonats gleich und besonders bevorzugt niedriger als der Schmelzen der Schichten a) oder b). insbesondere kann der MVR-Wert des Polycarbonats im Bereich von 0,2 bis 2,0, bevorzugt von 0,5 bis 1,8 liegen.

Das Polycarbonat der Trägerschicht kann ein mittleres Molekulargewicht M_{w} im Bereich von 35.000 bis 70.000 (g/mol) aufweisen. Das Molekulargewicht kann z. B. nach der Differential-Scanning-Chromatographie Methode (DSC) oder durch Gelchromatographie anhand von Eichstandards bzw. Eichgeraden bestimmt werden.

### Zusatz- und Hilfsstoffe

Die Schichten a), b) und c) können übliche Zusatz- und Hilfsstoffe enthalten. Zu nennen sind Gleitmittel, z. B. Pentaerythritstearat oder Stearylalkohol, die genannten Lichtschutzmittel, sowie Thermooxidationsstabilisatoren oder Prozessstabilisatoren. Eine Aufstellung dem Fachmann bekannter üblicher Zusatz- und Hilfsstoffe ist z. B. aus dem Plastics Additives Handbook, 5th Edition, Ed. Hans Zweifel, Hanser Publishers München, Carl Hanser Verlag München, 2001*,* zu entnehmen.

### Mehrschichtfolie

Die in der Mehrschichtfolie verwendeten (Meth)acrylatcopolymere und das Polycarbonat sind so ausgewählt, daß ein aus einer Mischung aus 20 Gew.-% (Meth)acrylatcopolymer und 80 Gew.-% Polycarbonat hergestellter Probekörper eine Bruchdehnung (ISO 527-2) bei 100 °C mit einem Relativwert von mindestens 90 % des Wertes des enthaltenen Polycarbonats aufweist.

Die in der Mehrschichtfolie verwendeten (Meth)acrylatcopolymere und das Polycarbonat sind bevorzugt so ausgewählt, daß die Bruchdehnung (ISO 527-2) bei 100 °C eines aus einer Mischung aus 20 Gew.-% (Meth)acrylatcopolymer und 80 Gew.-% Polycarbonat hergestellten Probekörpers bevorzugt einen Absolutwert von 120 % oder darüber aufweist.

Die in der Mehrschichtfolie verwendeten (Meth)acrylatcopolymere und das Polycarbonat sind besonders bevorzugt so ausgewählt, daß bei einem aus einer Mischung aus 20 Gew.-% (Meth)acrylatcopolymer und 80 Gew.-% Polycarbonat hergestellten Probekörper mindestens vier der fünf weiteren Eigenschaften erfüllt sind:
I. eine Vicaterweichungstemperatur VET (ISO 306-B50) von mindestens 130 °C
II. ein E-Modul (ISO 527-2) bei 23 °C von mindestens 2000 MPa
III. ein E-Modul (ISO 527-2) bei 100 °C von mindestens 1800 MPa
IV. eine Bruchdehnung (ISO 527-2) bei 23 °C von mindestens 70 % des Wertes des enthaltenen Polycarbonats
V. einen Schmelzindex MVR (ISO 1133, 230 °C / 3,8 kg) von 0,5 bis 2,0 cm³/10 min.

Unter der Polycarbonatschicht c) kann sich optional noch eine haftvermittelnde Schicht (Primerschicht) und eine Schicht aus einem Kunststoff, z. B. Acrylsäureester/Styrol/Acrylnitril-Pfropfcopolymer (ASA), Polybutylenterephthalat oder Polyurethan, der optional glasfaser-, insbesondere kurzfaser-, langfaser- oder aber kohlenstofffaser-verstärkt sein kann, befinden.

Bevorzugt handelt es sich um eine Schicht aus optional verstärktem Kunststoff, die durch Hinterspritzen oder Hinterschäumen aufgebracht wurde.

### Verfahren

Die Mehrschichtfolie kann in an sich bekannter Weise durch Lackieren, Laminieren, bevorzugt aber durch Coextrusion der Schichten a), b, und c) hergestellt werden. Dies ist insbesondere dann möglich, wenn die Trägerschicht c) aus Polycarbonat besteht, welches einen um nicht mehr als 30 % höheren, bevorzugt nicht mehr als 20 % höheren, besonders bevorzugt den gleichen oder einen niedrigeren MVR-Wert (ISO 1133, 230 °C / 3,8 kg) als die Schmelzen der Schichten a) oder b) mit den (Meth)acrylatcopolymeren aufweist. Insbesondere kann der MVR-Wert des Polycarbonats im Bereich von 0,2 bis 2,0, bevorzugt von 0,5 bis 1,8 liegen.

Die Schichten a) und b) können jeweils Schichtdicken im Bereich 5 bis 200, bevorzugt 10 bis 130 µm aufweisen. Die Trägerschicht kann Schichtdicken von z. B. 100 bis 5000 µm aufweisen. Die Folienbreite kann im Bereich von z. B. 100 bis 2000 mm liegen.

### Recycling

Der Aufbau der erfindungsgemäßen Mehrschichtfolie ermöglicht ein Verfahren bei dem man Folienabfall zerkleinert, direkt als Trägerschicht c) verwendet oder dem Material für die Trägerschicht c), z. B. reinem Polycarbonat, in der Schmelze zumischt, und die Mehrschichtfolie aus den Schmelzen a), b) und der Schmelze der bzw. für die Trägerschicht c) coextrudiert, wobei der Vorgang mehrfach erfolgen kann, mit der Maßgabe, daß die Trägerschicht c) nicht mehr als 30 Gew.-% des Materials der Schichten a) und b) enthalten darf.

Wenn man Folienmaterial, z. B. verschnittbedingten Abfall, dessen Schichten a) und b) 20 Gew.-% ausmachen und die ausschließlich aus Polycarbonat bestehende Schicht c) folglich 80 Gew.-% ausmacht, wiederverwerten will, kann man dieses direkt für die Schmelze einer neuen Trägerschicht c) einsetzen, die dann 20 Gew.-% des Materials der Schichten a) und b) enthält. Die Eigenschaften einer daraus hergestellten Trägerschicht bzw. einer neuen Mehrschichtfolie werden bei diesem Anteil noch nicht wesentlich beeinträchtigt. Alternativ kann man das Material auch wiederverwerten, indem man es in geringeren Anteilen einer für die Trägerschicht vorgesehenen Polycarbonat-Schmelze zumischt.

### Verwendungen

Die erfindungsgemäße Mehrschichtfolie kann insbesondere für äußere Oberflächen von Haushaltsgeräten, Kommunikationsgeräten, Hobby- oder Sportgeräten, Karosserieteilen oder Teilen von Karosserieteilen im Automobil-, Schiffs- oder Flugzeugbau verwendet werden.

### Teilverträgliche Polymermischungen

Die Erfindung betrifft somit teilverträgliche Polymermischungen aus einem (Meth)acrylatcopolymer und einem Polycarbonat, **dadurch gekennzeichnet, daß** ein aus der Polymermischung hergestellter Probekörper in Folge der Teilverträglichkeit der Polymere in der Durchsicht nicht transparent sondern transluzent , also getrübt durchsichtig, erscheint und ein aus einer Mischung aus 20 Gew.-% (Meth)acrylatcopolymer und 80 Gew.-% Polycarbonat hergestellter Probekörper eine Bruchdehnung (ISO 527-2) bei 100 °C mit einem Relativwert von mindestens 90 % des Wertes des enthaltenen Polycarbonats aufweist.

Die vorteilhaften Eigenschaften der Teilverträglichkeit treten ab einem Anteil von einem der Polymere von mindestens 5, bevorzugt mindestens 10 oder mindestens 20 Gew.-% in der Mischung deutlich hervor.

Die Transluzenz äußert sich z. B. in einer gegenüber klaren Formkörpern deutlich reduzierten Transmission.

Der Lichttransmissionsgrad für Tageslicht (Normlichtart D65, 10°) τ_{D65} s. z. B. DIN 5033/5036, eines Probekörpers aus Mischung gleicher Anteile von teilverträglichen (Meth)acrylatcopolymeren und Polycarbonat kann z. B. im Bereich von 25 bis 65 % liegen.

Bei Formkörpern mit einem Schichtaufbau aus beiden teilverträglichen Polymeren, wie bei der erfindungsgemäßen Mehrschichtfolie, befindet sich die teilverträgliche Mischung an der Grenzfläche zwischen den Polymeren. Die Teilverträglichkeit, Trübung, in der Grenzfläche ist mit bloßen Auge meist nicht zu erkennen, kann aber z. B. bei der Betrachtung eines dünnen Schnitts unter dem Lichtmikroskop erkannt werden.

Bei einem einheitlichen Formkörper oder einem Teil eines solchen, der aus einer Mischung beider teilverträglichen Polymeren besteht, liegt ebenfalls die erfindungsgemäße teilverträgliche Polymermischung vor.

Eine teilverträgliche Polymermischung liegt bei der erfindungsgemäßen Mehrschichtfolie in der Schichtgrenze von Schicht b) zur Trägerschicht c) und gegebenenfalls in der Schicht c) vor, sofern diese Anteile der Schichten a) und b) enthält.

### BEISPIELE

### Prüfungen und Messungen

Sowohl aus den mit UV-Absorber versetzten (Meth)acrylatcopolymer 1 bis 4, als auch von den Polycarbonattypen (PC-Typ) 1 bis 3, sowie von den 20/80 Mischungen aus den (Meth)acrylatcopolymer 1 bis 4 mit den PC-Typen 1 bis 3 wurden normgerechte Prüfkörper durch Spritzguss hergestellt.

Vicaterweichungstemperatur VET (ISO 306-B50)
E-Modul (ISO 527-2) bei 23 °C
E-Modul (ISO 527-2) bei 100 °C
Bruchdehnung (ISO 527-2) bei 23 °C
Bruchdehnung (ISO 527-2) bei 100 °C
Schmelzindex MVR (ISO 1133, 230 °C / 3,8 kg)
Zugfestigkeit (ISO 527-2) bei 23 °C
Zugfestigkeit (ISO 527-2) bei 100 °C

### Herstellung der (Meth)acrylatcopolymere 1 bis 4

### (Meth)acrylatcopolymer 1

In 90 Gew.-Teilen Methylmethacrylat und 10 Gew.-Teilen Cyclohexylmethacrylat werden 0,035 Gew.-Teile Dilauroylperoxid, 0,01 Gew.-Teile 2,2-Bis-(tert.-butylperoxy)-butan und 0,33 Gew.-Teile Dodecylmercaptan gelöst. Das resultierende Gemisch wird in eine Polymerisationskammer gefüllt und 10 Minuten entgast. Danach wird im Wasserbad 5 Stunden bei 65°C, nachfolgend 24 Stunden bei 55°C Wasserbadtemperatur polymerisiert. Nach Entfernung der Polymerisationskammer aus dem Wasserbad wird das Polymerisat in der Polymerisationskammer noch 10 Stunden bei 120°C im Luftschrank getempert. Die Lösungsviskosität des Polymeren in Chloroform bei 25 °C (ISO 1628 - Teil 6) beträgt 60 ml/g (J-Wert). Die Vicaterweichungstemperatur VET (ISO 306-B50) beträgt 109,8 °C.

### (Meth)acrylatcopolymer 2

In 80 Gew.-Teilen Methylmethacrylat und 20 Gew.-Teilen Cyclohexylmethacrylat werden 0,035 Gew.-Teile Dilauroylperoxid, 0,01 Gew.-Teile 2,2-Bis-(tert.-butylperoxy)-butan und 0,33 Gew.-Teile Dodecylmercaptan gelöst. Das resultierende Gemisch wird in eine Polymerisationskammer gefüllt und 10 Minuten entgast. Danach wird im Wasserbad 5 Stunden bei 65°C, nachfolgend 24 Stunden bei 55°C Wasserbadtemperatur polymerisiert. Nach Entfernung der Polymerisationskammer aus dem Wasserbad wird das Polymerisat in der Polymerisationskammer noch 10 Stunden bei 120°C im Luftschrank getempert. Die Lösungsviskosität des Polymeren in Chloroform bei 25 °C (ISO 1628 - Teil 6) beträgt 60 ml/g (J-Wert). Die Vicaterweichungstemperatur VET (ISO 306-B50) beträgt 107,2 °C.

### (Meth)acrylatcoaolymer 3

In 90 Gew.-Teilen Methylmethacrylat und 10 Gew.-Teilen Cyclohexylmethacrylat werden 0,035 Gew.-Teile Dilauroylperoxid, 0,01 Gew.-Teile 2,2-Bis-(tert.-butylperoxy)-butan und 0,40 Gew.-Teile Dodecylmercaptan gelöst. Das resultierende Gemisch wird in eine Polymerisationskammer gefüllt und 10 Minuten entgast. Danach wird im Wasserbad 5 Stunden bei 65°C, nachfolgend 24 Stunden bei 55°C Wasserbadtemperatur polymerisiert. Nach Entfernung der Polymerisationskammer aus dem Wasserbad wird das Polymerisat in der Polymerisationskammer noch 10 Stunden bei 120°C im Luftschrank getempert. Die Lösungsviskosität in Chloroform bei 25 °C (ISO 1628 - Teil 6) beträgt 50 ml/g (J-Wert).

### (Meth)acrylatcopolymer 4

In 80 Gew.-Teilen Methylmethacrylat und 20 Gew.-Teilen Cyclohexylmethacrylat werden 0,035 Gew.-Teile Dilauroylperoxid, 0,01 Gew.-Teile 2,2-Bis-(tert.-butylperoxy)-butan und 0,40 Gew.-Teile Dodecylmercaptan gelöst. Das resultierende Gemisch wird in eine Polymerisationskammer gefüllt und 10 Minuten entgast. Danach wird im Wasserbad 5 Stunden bei 65°C, nachfolgend 24 Stunden bei 55°C Wasserbadtemperatur polymerisiert. Nach Entfernung der Polymerisationskammer aus dem Wasserbad wird das Polymerisat in der Polymerisationskammer noch 10 Stunden bei 120°C im Luftschrank getempert. Die Lösungsviskosität in Chloroform bei 25 °C (ISO 1628 - Teil 6) beträgt 50 ml/g (J-Wert).

### Lichtschutzmittel

Nach Herstellung der (Meth)acrylatcopolymer 1 bis 4 wurden diese zusammen mit dem UV-Absorber Tinuvin® 360, Fa. Ciba, (0,6 Gew.-%) granuliert. Zum Vergleich wird eine Standard-Polymethylmethacrylat(PMMA)-Formmasse (Copolymer aus 96 Gew.-% Methylmethacrylat und 4 Gew.-% Methylacrylat mit einem mittleren Molekulargewicht M_{w} (Gewichtsmittel) von ca. 140.000 (g/mol), die mit Polycarbonat unverträglich ist, mit aufgeführt.

Die Eigenschaften der (Meth)acrylatcopolymere 1 bis 4 und der Standard-Polymethylmethacrylat-Formmasse sind in **Tabelle 1** zusammengefaßt

### Mischungen der (Meth)acrylatcopolymere 1 bis 4 mit verschiedenen

### Polycarbonaten

Die mit UV - Absorber compoundierten (Meth)acrylatcopolymere 1 bis 4 wurden mit drei unterschiedlichen handelsüblichen Polycarbonat Typen der Fa. DOW in einem Gewichtsverhältnis von 20 zu 80 ((Meth)acrylatcopolymer zu Polycarbonat) in einem Zweischneckenextruder compoundiert.
Die Namen der PC Typen lauten:
- Polycarbonattyp 1 (Calibre® 300-10)
- Polycarbonattyp 2 (Calibre® 200-10)
- Polycarbonattyp 3 (Calibre® 200-23)

Die Eigenschaften der Polycarbonattypen 1 bis 3 und deren Mischungen mit (Meth)acrylatcopolymeren 1 bis 4 sind in **Tabelle 2** zusammengefaßt.

### Chemikalienbeständigkeitstests

Die mit UV-Absorber versetzten (Meth)acrylatcopolymere 1 und 2 als auch eine Standard Polymethylmethacrylat-Formmasse (Copolymer aus 96 Gew.-% Methylmethacrylat und 4 Gew.-% Methylacrylat mit einem mittleren Molekulargewicht M_{w} von ca. 140.000 (g/mol), mit Polycarbonat unverträglich) wurden zu Platten extrudiert und diese Chemikalienbeständigkeitstests ausgesetzt.

Daneben ist die Chemikalienbeständigkeit der erfindungsgemäßen (Meth)acrylatcopolymere 1 und 2 im Vergleich zu Standard-Polymethylmethacrylat bzgl. sauren, basischen wässriger Lösungen, als auch Pankreatin-Lösung und Benzin vergleichbar. Zusätzlich ist die Spannungsrißbeständigkeit von extrudierten Platten aus den erfindungsgemäßen (Meth)acrylatcopolymeren 1 und 2 bei Einwirkung von Ethanol / Wasser Lösungen deutlich besser als die der mit Standard-Polymethylmethacrylat hergestellten Platten.

**Tabelle 1: Eigenschaften der (Meth)acrylatcopolymer 1 bis 4 und einer Standard-Polymethylmethacrylat-Formmasse**

| | | Standard-PMMA | (Meth)acrylat-copolymer 1 | (Meth)acrylat-copolymer 2 | (Meth)acrylat-copolymer 3 | (Meth)acrylat-copolymer 4 |
|---|---|---|---|---|---|---|
| Monomerzusammensetzung | | | | | | |
| Methylmethacrylat | Gew.-% | | 90 | 80 | 90 | 80 |
| Cyclohexylmethacrylat | Gew.-% | | 10 | 20 | 10 | 20 |
| | | | | | | |

| **Eigenschaften** | Einheit | | | | | |
|---|---|---|---|---|---|---|
| J-Wert | ml/g | | 60 | 60 | 50 | 50 |
| VST | °C | 104 | 109,8 | 107,2 | | |
| Schlagzähigkeit | kJ/m² | 20 | 22,6 | 17,4 | | |
| E-Modul (T = 23 °C) | MPa | 3300 | 3300 | 3200 | | |
| E-Modul (T = 100 °C) | MPa | 780 | 960 | 960 | | |
| Zugfestigkeit (T = 23 °C) | MPa | 70,3 | 71,2 | 56,4 | | |
| Zugfestigkeit (T =100 °C) | MPa | 20,3 | 23,7 | 24,2 | | |

**Tabelle 2: Eigenschaften der Polycarbonattypen 1 bis 3 sowie deren Mischungen mit den (Meth)acrylatcopolymer 1 bis 4 Beispiele A bis D: erfindungsgemäß, Beispiele E bis L: nicht erfindungsgemäß**

| **Abmischung** | | | | | **A** | **B** | **C** | **D** | **E** | **F** | **G** | **H** | **I** | **J** | **K** | **L** |
|---|---|---|---|---|---|---|---|---|---|---|---|---|---|---|---|---|
| (Meth)acrylatco-polymer | | | | | 1 | 2 | 1 | 2 | 1 | 2 | 3 | 4 | 3 | 4 | 3 | 4 |
| Anteil | Gew.-% | | | | 20 | 20 | 20 | 20 | 20 | 20 | 20 | 20 | 20 | 20 | 20 | 20 |

| PC Typ | | | | | | | | | | | | | | | | |
|---|---|---|---|---|---|---|---|---|---|---|---|---|---|---|---|---|
| 1 | Gew.-% | 100 | | | 80 | 80 | | | | | 80 | 80 | | | | |
| 2 | Gew.-% | | 100 | | | | 80 | 80 | | | | | 80 | 80 | | |
| 3 | Gew.-% | | | 100 | | | | | 80 | 80 | | | | | 80 | 80 |
| | | | | | | | | | | | | | | | | |

| **Eigenschaften** | Einheit | | | | | | | | | | | | | | | |
|---|---|---|---|---|---|---|---|---|---|---|---|---|---|---|---|---|
| E-Modul (23° C) | MPa | 2335 | 2321 | 2350 | 2546 | 2584 | 2540 | 2547 | 2600 | 2600 | 2570 | 2590 | 2550 | 2550 | 259D | 2610 |
| E-Modul (100°C) | MPa | 2080 | 2107 | - | 1910 | 1954 | 2014 | 2059 | - | - | - | - | - | - | - | - |
| Bruchdehnung (T = 23°) | % | 111 | 111 | 83,9 | **85,1** | **90,2** | **84** | **84** | 46 | 28 | 71,5 | 72,2 | 56,7 | 61.2 | 29.3 | 29,5 |
| Bruchdehnung (T = 100°C) | % | 129 | 120 | - | 127 | 133 | 130 | 129 | - | - | - | - | - | - | - | - |
| Schlagzähigkeit (T = 23°C) | kJ/m² | k. B.* | k. B. | k. B | k. B. | k. B. | k. B. | k. B. | 223 | k. B. | k. B. | k. B. | k. B. | k. B. | 209 | k. B. |
| VST | °C | 150 | 150 | 148,6 | 139,7 | 135,4 | 136,4 | 136,7 | 136,6 | 136,9 | 137,3 | 136,1 | 138,4 | 138,7 | 136,1 | 136,0 |
| MVR | cm³/ 10min | 1,6 | 1,6 | 3,5 | 1,5 | 1,4 | 1,4 | 1,4 | 2,8 | 2,9 | 1,6 | 1,6 | 1,6 | 1,6 | 3,0 | 3,0 |

| | | | | | | | | | | | | | | | | |
|---|---|---|---|---|---|---|---|---|---|---|---|---|---|---|---|---|
| Abkürzungen: * k.B.: kein Bruch | | | | | | | | | | | | | | | | |

## Patentansprüche

1. Mehrschichtfolie, umfassend zumindest eine obere Schicht a) und eine mittlere Schicht b) aus (Meth)acrylatcopolymeren sowie eine Trägerschicht c) aus Polycarbonat,
**dadurch gekennzeichnet, daß**
a) die obere Schicht ein Lichtschutzmittel enthält und aus einem (Meth)acrylatcopolymeren besteht, welches mit dem Polycarbonat der Trägerschicht c) teilverträgliche Mischungen ausbilden kann, wobei ein aus einer Mischung aus 20 Gew.-% (Meth)acrylatcopolymer und 80 Gew.-% Polycarbonat hergestellter Probekörper eine Bruchdehnung (ISO 527-2) bei 23 °C von mindestens 75 % aufweist,
b) die mittlere Schicht einen Farbstoff und gegebenenfalls ein Lichtschutzmittel enthält und aus einem mit dem der Schicht a) identischen oder verschiedenen (Meth)acrylatcopolymeren besteht, welches mit dem Polycarbonat der Trägerschicht c) teilverträgliche Mischungen ausbilden kann, wobei ein aus einer Mischung aus 20 Gew.-% (Meth)acrylatcopolymer und 80 Ges.-% Polycarbonat hergestellter Probekörper eine Bruchdehnung (180 527-2) bei 23 °C von mindestens 75 % aufweist,
c) die Trägerschicht aus Polycarbonat besteht, welches gegebenenfalls bis zu 30 Gew.-% des Materials der Schichten a) und b) enthalten kann.

2. Mehrschichtfolie nach Anspruch 1, **dadurch gekennzeichnet, daß** die (Meth)acrylatcopolymere aus folgenden Einheiten bestehen:
a) 95 bis 5 Gew.-% Methylmethacrylat-Einheiten und gegebenenfalls 0 bis 40 Gew.-% weiteren vinylischen Monomer-Einheiten und
b) 5 bis 95 Gew.-% Estern der (Meth)acrylsäure, die folgende Reste in der Estergruppe aufweisen können:
Cycloalkyl- oder ein mehrfachalkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäure-Carboxylrest gebunden sein können.

3. Mehrschichtfolie nach Anspruch 1 oder 2, **dadurch gekennzeichnet, daß** die (Meth)acrylatcopolymere, aus 60 bis 95 Gew.-% Methylmethacrylat und 40 bis 5 Gew.-% Cyclohexylmethacrylat bestehen.

4. Mehrschichtfolie nach einem oder mehreren der Ansprüche 1 bis 3 , **dadurch gekennzeichnet, daß** die (Meth)acrylatcopolymere eine Lösungsviskosität in Chloroform bei 25 °C (ISO 1628 - Teil 6) im Bereich von 50 bis 80 ml/g aufweisen.

5. Mehrschichtfolie nach einem oder mehreren der Ansprüche 1 bis 4, **dadurch gekennzeichnet, daß** die (Meth)acrylatcopolymere eine Vicaterweichungstemperatur VET (ISO 306-B50) von mindestens 105 °C aufweisen.

6. Mehrschichtfolie nach einem oder mehreren der Ansprüche 1 bis 5, **dadurch gekennzeichnet, daß** sich unter der Polycarbonatschicht c) noch eine optionale haftvermittelnde Schicht (Primerschicht) und eine Schicht aus einem Kunststoff, der optional faserverstärkt sein kann, befindet.

7. Mehrschichtfolle nach Anspruch 6, **dadurch gekennzeichnet, daß** die Schicht aus Kunststoff durch Hinterspritzen oder Hinterschäumen aufgebracht wurde und den Kunststofftyp Acrylsäureester/Styrol/Acrylnitril-Pfropfcopolymer (ASA), Polybutylenterephthalat oder Polyurethan umfasst.

8. Mehrschichtfolie nach einem oder mehreren der Ansprüche 1 bis 6, **dadurch gekennzeichnet, daß** die mittlere Schicht deckend eingefärbt ist.

9. Mehrschichtfolie nach einem oder mehreren der Ansprüche 1 bis 8, **dadurch gekennzeichnet, daß** das Polycarbonat der Trägerschicht ein mittleres Molekulargewicht M_{w} im Bereich von 35.000 bis 70.000 aufweist.

10. Mehrschichtfolie nach einem oder mehreren der Ansprüche 1 bis 9, **dadurch gekennzeichnet, daß** die (Meth)acrylatcopolymere und das Polycarbonat so ausgewählt sind, daß ein aus einer Mischung aus 20 Gew.-% (Meth)acrylatcopolymer und 80 Gew.-% Polycarbonat hergestellter Probekörper eine Bruchdehnung (ISO 527-2) bei 100 °C mit einem Relativwert von mindestens 90 % des Wertes des enthaltenen Polycarbonats aufweist.

11. Mehrschichtfolie nach Anspruch 10, **dadurch gekennzeichnet, daß** die Bruchdehnung (ISO 527-2) bei 100 °C einen Absolutwert 120 % aufweist.

12. Mehrschichtfolie nach Anspruch 10 oder 11, **dadurch gekennzeichnet, daß** ein aus einer Mischung aus 20 Gew.-% (Meth)acrylatcopolymer und 80 Gew.-% Polycarbonat hergestellter Probekörper mindestens vier der fünf weiteren Eigenschaften aufweist:
I. eine Vicaterweichungstemperatur VET (ISO 306-B50) von mindestens 130 °C
II. ein E-Modul (ISO 527-2) bei 23 °C von mindestens 2000 MPa
III. ein E-Modul (ISO 527-2) bei 100 °C von mindestens 1800 MPa
IV. eine Bruchdehnung (ISO 527-2) bei 23 °C von mindestens 70 % des Wertes des enthaltenen Polycarbonats
V. einen Schmelzindex MVR (ISO 1133, 230 °C / 3,8 kg) von 0,5 bis 2,0 cm³/10 min.

13. Verfahren zur Herstellung einer Mehrschichtfolie nach einem oder mehreren der Ansprüche 1 bis 11 in an sich bekannter Weise durch Coextrusion der Schichten a), b, und c).

14. Verfahren nach Anspruch 13, **dadurch gekennzeichnet, daß** man Folienabfall zerkleinert, direkt als Trägerschicht c) verwendet oder dem Material für die Trägerschicht c) in der Schmelze zumischt, und die Mehrschichtfolie aus den Schmelzen a), b) und einer Schmelze der Trägerschicht c) coextrudiert, wobei der Vorgang mehrfach erfolgen kann, mit der Maßgabe, daß Trägerschicht c) nicht mehr als 30 Gew.-% des Materials der Schichten a) und b) enthalten darf.

15. Verwendung einer Mehrschichtfolie nach einem oder mehreren der Ansprüche 1 bis 12 für äußere Oberflächen von Haushaltsgeräten, Kommunikationsgeräten, Hobby- oder Sportgeräten, Karosserieteilen oder Teilen von Karosserieteilen im Automobil-, Schiffs- oder Flugzeugbau.

16. Teilverträgliche Polymermischung aus einem (Meth)acrylatcopolymer und einem Polycarbonat, **dadurch gekennzeichnet, daß** ein aus der Polymermischung hergestellter Probekörper in Folge der Teilverträglichkeit der Polymere In der Durchsicht nicht transparent sondern transluzent erscheint und ein aus einer Mischung aus 20 Gew.-% (Meth)acrylatcopolymer und 80 Gew.-% Polycarbonat hergestellter Probekörper eine Bruchdehnung (ISO 527-2) bei 100 °C mit einem Relativwert von mindestens 90 % des Wertes des enthaltenen Polycarbonats aufweist.

17. Teilverträgliche Polymermischung nach Anspruch 16, **dadurch gekennzeichnet, daß** sich diese bei Formkörpern mit einem Schichtaufbau aus beiden teilverträglichen Polymeren an der Grenzfläche zwischen diesen befindet und/oder daß es sich um einen einheitlichen Formkörper oder einen Teil eines solchen handelt, der insgesamt aus der teilverträglichen Polymermischung besteht.

18. Teilverträgliche Polymermischung nach Anspruch 16 oder 17, **dadurch gekennzeichnet, daß** diese in einer Mehrschichtfolie gemäß den Ansprüchen 1 bis 12 in der Schichtgrenze von Schicht b) zur Trägerschicht c) und gegebenenfalls in der Schicht c) enthalten ist, sofern diese Anteile der Schichten a) und b) enthält.

## Claims

1. Multilayer film, encompassing at least one upper layer a) and one middle layer b) composed of (meth)acrylate copolymers, and also a backing layer c) composed of polycarbonate,
**characterized in that**
a) the upper layer comprises a light stabilizer and is composed of a (meth)acrylate copolymer which can form semicompatible mixtures with the polycarbonate of the backing layer c), where a test specimen produced from a mixture composed of 20% by weight of (meth)acrylate copolymer and 80% by weight of polycarbonate has a tensile strain at break of at least 75% (ISO 527-2) at 23°C,
b) the middle layer comprises a dye and, where appropriate, a light stabilizer, and is composed of a (meth)acrylate copolymer which is identical with or different from that of the layer a) and which can form semicompatible mixtures with the polycarbonate of the backing layer c), where a test specimen produced from a mixture composed of 20% by weight of (meth)acrylate copolymer and 80% by weight of polycarbonate has a tensile strain at break of at least 75% (ISO 527-2) at 23°C,
c) the backing layer is composed of polycarbonate which can, where appropriate, comprise up to 30% by weight of the material of the layers a) and b).

2. Multilayer film according to Claim 1, **characterized in that** the (meth)acrylate copolymers are composed of the following units:
a) from 95 to 5% by weight of methyl methacrylate units and, where appropriate, from 0 to 40% by weight of other vinylic monomer units and
b) from 5 to 95% by weight of esters of (meth)acrylic acid, which may have the following radicals in the ester group:
cycloalkyl or a multiple-alkyl-substituted cycloalkyl radical having from 5 to 12 carbon atoms, where the radicals mentioned may have bonding to the (meth)acrylic acid carboxyl radical by way of alkylene groups having from 1 to 6 carbon atoms, which may also have branching, or oxyalkylene groups having from 2 to 4 carbon atoms.

3. Multilayer film according to Claim 1 or 2, **characterized in that** the (meth)acrylate copolymers are composed of from 60 to 95% by weight of methyl methacrylate and from 40 to 5% by weight of cyclohexyl methacrylate.

4. Multilayer film according to one or more of Claims 1 to 3, **characterized in that** the solution viscosity of the (meth)acrylate copolymers in chloroform at 25°C (ISO 1628 - Part 6) is in the range from 50 to 80 ml/g.

5. Multilayer film according to one or more of Claims 1 to 4, **characterized in that** the Vicat softening point VSP (ISO 306-B50) of the (meth)acrylate copolymers is at least 105°C.

6. Multilayer film according to one or more of Claims 1 to 5, **characterized in that** below the polycarbonate layer c) there is also an optional adhesion-promoting layer (primer layer) and a layer composed of a plastic, which may optionally have been fibre-reinforced.

7. Multilayer film according to Claim 6, **characterized in that** the layer composed of plastic has been applied by back-moulding or back-foaming and the type of plastic encompasses acrylate-styrene-acrylonitrile graft copolymer (ASA), polybutylene terephthalate or polyurethane.

8. Multilayer film according to one or more of Claims 1 to 6, **characterized in that** the middle layer has opaque coloration.

9. Multilayer film according to one or more of Claims 1 to 8, **characterized in that** the polycarbonate of the backing layer has an average molar mass M_{w} in the range from 35 000 to 70 000.

10. Multilayer film according to one or more of Claims 1 to 9, **characterized in that** the selection of the (meth)acrylate copolymers and of the polycarbonate is such that the tensile strain at break (ISO 527-2) at 100°C, calculated as a relative value, for a test specimen produced from a mixture composed of 20% by weight of (meth)acrylate copolymer and 80% by weight of polycarbonate is at least 90% of the value for the polycarbonate present.

11. Multilayer film according to Claim 10, **characterized in that** the absolute value of the tensile strain at break (ISO 527-2) at 100°C is 120%.

12. Multilayer film according to Claim 10 or 11, **characterized in that** a test specimen produced from a mixture composed of 20% by weight of (meth)acrylate copolymer and 80% by weight of polycarbonate has at least four of the following five further properties:
I. a Vicat softening point VSP (ISO 306-B50) of at least 130°C
II. a modulus of elasticity (ISO 527-2) at 23°C of at least 2000 MPa
III. a modulus of elasticity (ISO 527-2) at 100°C of at least 1800 MPa
IV. a tensile strain at break (ISO 527-2) at 23°C which is at least 70% of the value for the polycarbonate present
V. a melt index MVR (ISO 1133, 230°C/3.8 kg) of from 0.5 to 2.0 cm³/10 min.

13. Process for producing a multilayer film according to one or more of Claims 1 to 11 in a manner known per se via coextrusion of the layers a), b) and c).

14. Process according to Claim 13, **characterized in that** film waste is comminuted and directly used as backing layer c) or admixed in the melt with the material for the backing layer c), and the multilayer film composed of the melts a), b) and a melt of the backing layer c) is coextruded, and the procedure may take place two or more times, with the proviso that backing layer c) cannot comprise more than 30% by weight of the material of the layers a) and b).

15. Use of a multilayer film according to one or more of Claims 1 to 12 for exterior surfaces of household appliances, of communication devices, of equipment for hobbies or for sports, of bodywork parts or of parts of bodywork parts in the construction of cars, ships or aircraft.

16. Semicompatible polymer mixture composed of a (meth)acrylate copolymer and of a polycarbonate, **characterized in that** a test specimen produced from the polymer mixture is not transparent but is translucent as a consequence of the semicompatibility of the polymers, and the tensile strain at break (ISO 527-2) at 100°C, calculated as a relative value, of a test specimen produced from a mixture composed of 20% by weight of (meth)acrylate copolymer and 80% by weight of polycarbonate is at least 90% of the value for the polycarbonate present.

17. Semicompatible polymer mixture according to Claim 16, **characterized in that** its location is between the two semicompatible polymers at the interface between these in the case of mouldings with a layer structure composed thereof, and/or **in that** it is a unitary moulding or a part of such a moulding, composed entirely of the semicompatible polymer mixture.

18. Semicompatible polymer mixture according to Claim 16 or 17, **characterized in that** it is present in a multilayer film according to Claims 1 to 12 at the boundary between layer b) and the backing layer c) and, where appropriate, is present in the layer c), to the extent that the latter comprises proportions of layers a) and b).

## Revendications

1. Feuille à plusieurs couches, comprenant au moins une couche supérieure a) et une couche centrale b) en copolymères de (méth)acrylate ainsi qu'une couche support c) en polycarbonate, **caractérisée en ce que**
a) la couche supérieure contient un agent de protection contre la lumière et est constituée par un copolymère de (méth)acrylate, qui peut former des mélanges partiellement compatibles avec le polycarbonate de la couche support c), une éprouvette préparée à partir d'un mélange de 20% en poids de copolymère de (méth)acrylatè et de 80% en poids de polycarbonate présentant un allongement à la rupture (ISO 527-2) à 23°C d'au moins 75%,
b) la couche centrale contient un colorant et le cas échéant un agent de protection contre la lumière et est constituée par un copolymère de (méth)acrylate identique ou différent de celui de la couche a), qui peut former des mélanges partiellement compatibles avec le polycarbonate de la couche support c), une éprouvette préparée à partir d'un mélange de 20% en poids de copolymère de (méth)acrylate et de 80% en poids de polycarbonate présentant un allongement à la rupture (ISO 527-2) à 23°C d'au moins 75%,
c) la couche support est constituée par du polycarbonate, qui peut le cas échéant contenir jusqu'à 30% en poids du matériau des couches a) et b).

2. Feuille à plusieurs couches selon la revendication 1, **caractérisée en ce que** les copolymères de (méth)acrylate sont constitués par les unités suivantes :
a) 95 à 5% en poids d'unités de méthacrylate de méthyle et le cas échéant 0 à 40% en poids d'autres unités monomères de vinyle et
b) 5 à 95% en poids d'esters de l'acide (méth)acrylique, qui peuvent présenter les radicaux suivants dans le groupe ester:
radical cycloalkyle ou un radical cycloalkyle polysubstitué par alkyle comprenant 5 à 12 atomes de carbone, les radicaux mentionnés pouvant être liés, via des groupes alkylène comprenant 1 à 6 atomes de carbone, qui peuvent également être ramifiés, ou des groupes oxyalkylène comprenant 2 à 4 atomes de carbone, au radical carboxyle de l'acide (méth)acrylique.

3. Feuille à plusieurs couches selon la revendication 1 ou 2, **caractérisée en ce que** les copolymères de (méth)acrylate sont constitués par 60 à 95% en poids de méthacrylate de méthyle et 40 à 5% en poids de méthacrylate de cyclohexyle.

4. Feuille à plusieurs couches selon l'une ou plusieurs des revendications 1 à 3, **caractérisée en ce que** les copolymères de (méth)acrylate présentent une viscosité en solution dans du chloroforme à 25°C (ISO 1628 - partie 6) dans la plage de 50 à 80 ml/g.

5. Feuille à plusieurs couches selon l'une ou plusieurs des revendications 1 à 4, **caractérisée en ce que** les copolymères de (méth)acrylate présentent une température de ramollissement Vicat VET (ISO 306-B50) d'au moins 105°C.

6. Feuille à plusieurs couches selon l'une ou plusieurs des revendications 1 à 5, **caractérisée en ce que** sous la couche de polycarbonate c) se trouve encore une éventuelle couche promotrice de l'adhérence (couche d'apprêt) et une couche en un matériau synthétique, qui peut éventuellement être renforcée par des fibres.

7. Feuille à plusieurs couches selon la revendication 6, **caractérisée en ce que** la couche en matériau synthétique est appliquée par injection ou moussage à l'arrière et comprend le type de matériau synthétique copolymère greffé d'ester de l'acide acrylique/styrène/acrylonitrile (ASA), poly(téréphtalate de butylène) ou polyuréthane.

8. Feuille à plusieurs couches selon l'une ou plusieurs des revendications 1 à 6, **caractérisée en ce que** la couche centrale est teintée de manière couvrante.

9. Feuille à plusieurs couches selon l'une ou plusieurs des revendications 1 à 8, **caractérisée en ce que** le polycarbonate de la couche support présente un poids moléculaire moyen M_{w} dans la plage de 35 000 à 70 000.

10. Feuille à plusieurs couches selon l'une ou plusieurs des revendications 1 à 9, **caractérisée en ce que** les copolymères de (méth)acrylate et le polycarbonate sont choisis de manière telle qu'une éprouvette préparée à partir d'un mélange de 20% en poids de copolymère de (méth)acrylate et de 80% en poids de polycarbonate présente un allongement à la rupture (ISO 527-2) à 100°C d'une valeur relative d'au moins 90% de la valeur du polycarbonate contenu.

11. Feuille à plusieurs couches selon la revendication 10, **caractérisée en ce que** l'allongement à la rupture (ISO 527-2) à 100°C présente une valeur absolue de 120%.

12. Feuille à plusieurs couches selon la revendication 10 ou 11, **caractérisée en ce qu'**une éprouvette préparée à partir d'un mélange de 20% en poids de copolymère de (méth)acrylate et de 80% en poids de polycarbonate présente au moins quatre des cinq propriétés suivantes :
I. une température de ramollissement Vicat VET (ISO 306-B50) d'au moins 130°C,
II. un module E (ISO 527-2) à 23°C d'au moins 2000 MPa
III. un module E (ISO 527-2) à 100°C d'au moins 1800 MPa
IV. un allongement à la rupture (ISO 527-2) à 23°C d'au moins 70% de la valeur du polycarbonate contenu
V. un indice de fusion MVR (ISO 1133, 230°C/3,8 kg) de 0,5 à 2,0 cm³/10 min.

13. Procédé pour la préparation d'une feuille à plusieurs couches selon l'une ou plusieurs des revendications 1 à 11 de manière connue en soi par coextrusion des couches a), b, et c).

14. Procédé selon la revendication 13, **caractérisé en ce qu'**on broie des déchets de feuille, on les utilise directement comme couche support c) ou on les mélange dans le matériau pour la couche support c) dans la masse fondue et on coextrude la feuille à plusieurs couches à partir des masses fondues a), b) et une masse fondue de la couche support c), le processus pouvant être réalisé plusieurs fois, à condition que la couche support c) ne puisse pas contenir plus de 30% en poids du matériau des couches a) et b).

15. Utilisation d'une feuille à plusieurs couches selon l'une ou plusieurs des revendications 1 à 12 pour les surfaces extérieures d'appareils domestiques, d'appareils de communication, d'appareils de loisir ou de sport, de pièces de carrosserie ou de parties de pièces de carrosserie dans la construction automobile, navale ou aéronautique.

16. Mélange de polymères partiellement compatibles constitué par un copolymère de (méth)acrylate et un polycarbonate, **caractérisé en ce qu'**une éprouvette préparée à partir du mélange de polymères, suite à la compatibilité partielle des polymères, lors de la vue en transparence, n'apparaît pas transparente, mais translucide et une éprouvette préparée à partir d'un mélange de 20% en poids de copolymère de (méth)acrylate et de 80% en poids de polycarbonate présente un allongement à la rupture (ISO 527-2) à 100°C d'une valeur relative d'au moins 90% de la valeur du polycarbonate contenu.

17. Mélange de polymères partiellement compatibles selon la revendication 16, **caractérisé en ce que** celui-ci se trouve, dans le cas de corps façonnés présentant une structure à couches constituée par les deux polymères partiellement compatibles, à l'interface entre ceux-ci et/ou **en ce qu'**il s'agit d'un corps façonné uniforme ou d'une partie de celui-ci, qui est constitué globalement par le mélange de polymères partiellement compatibles.

18. Mélange de polymères partiellement compatibles selon la revendication 16 ou 17, **caractérisé en ce qu'**il est contenu, dans une feuille à plusieurs couches selon les revendications 1 à 12, dans l'interface de la couche b) avec la couche support c) et le cas échéant dans la couche c), pour autant que celle-ci contienne des proportions des couches a) et b).
